# EUROPEAN PATENT APPLICATION

(11) **EP 3 503 433 A1**
(43) Date of publication of application: **26.06.2019**
(21) Application number: 17209028.4
(22) Date of filing: 20.12.2017
(51) Int. Cl.: H04B 10/116

(54) **METHOD, APPARATUS AND COMPUTER PROGRAM FOR ENCODING VISIBLE LIGHT COMMUNICATION INFORMATION**

(71) Applicant: Vestel Elektronik Sanayi ve Ticaret A.S., 45030 Manisa (TR)
(72) Inventor: ÍKIZLER, Anil, 45030 Manisa (TR)
(74) Representative: Martinez, Olivier Gildas

(57) **Abstract**

A method for encoding visible light communication information comprises determining (506) an amount of noise in a video frame. The method comprises adjusting a size (510, 512, 514) of a coding block of the video frame based on the determined amount of noise. The method comprises encoding (516) visible light communication information in the coding block of the video frame.

## Description

### Technical Field

The present disclosure relates to a method, an apparatus and a computer program for encoding visible light communication information.

### Background

Visible light communication is a data communication technique which uses visible light (ranging from around 390nm to 700nm) to convey data. Visible light communication is possible over a multitude of electronic items that comprise a screen and that can be imaged using a camera. Examples of such electronic items include televisions, personal computers, smartphones, and smart watches, and display screens or display devices generally. In one example, a video stream can be encoded with visible light information, thereby transmitting the visible light information when the encoded video is output at the screen of an electronic device.

Known visible light communication techniques often struggle to conceal the added visible light information. In one example, data tags and barcodes such as bokodes and "QR" or matrix barcodes and the like carrying visible light information can be added to images and video streams. Visible light information encoded in such images and video streams are, however, often visible to viewers. The information can, for example, obstruct elements of the image or video stream, thereby disrupting the viewing experience of the user. In another example, visible light information in images and videos can lead to luminance and chromatic deviations, thereby leaving visibly blemished areas on the images and video streams being used for visible light communication.

Arrangements for visible light communication that does not interfere with the user's view of the screen are known, but are not efficient or have increased bit error rates.

### Summary

According to a first aspect disclosed herein, there is provided a method for encoding visible light communication information, the method comprising:
determining an amount of noise in a video frame;
adjusting a size of a coding block of the video frame based on the determined amount of noise; and
encoding visible light communication information in the coding block of the video frame.

By adjusting the size of the coding block of the video frame based on the determined amount of noise, the amount of visible light communication information encoded in the video frame can be increased whilst reducing a bit error rate.

Encoding visible light communication information in the coding block of the video frame may comprise modulating a property of at least one pixel of the coding block based on the visible light communication information.

Modulating a property of at least one pixel of the coding block may comprise:
modulating a property of at least one pixel of the coding block in amplitude based on the visible light communication information.

Modulating a property of at least one pixel of the coding block in amplitude based on the visible light communication information may comprise:
setting a value of the property of the at least one pixel alternatively to 100-X% of an original value of the property when the visible light communication information to be encoded in the coding block comprises a first logical value, where X is an amplitude shift for the coding block; and
setting the value of the property of the at least one pixel to 100% or 100-X% of the original value of the property when the visible light communication information to be encoded in the coding block comprises a second logical value.

The amplitude shift X for the coding block may be determined based on the determined amount of noise.

The amplitude shift X for the coding block may be different from an amplitude shift X for a spatially adjacent coding block in the video frame.

The property of the at least one pixel may comprise at least one of a luminance and a colour hue.

The method may comprise:
comparing the determined amount of noise to at least one threshold; and
adjusting the size of the coding block in the video frame based on the comparing.

The method may comprise:
setting the size of the coding block in the video frame to a default size when the determined amount of noise is below a first threshold;
setting the size of coding block in the video frame to an increased size when the determined amount of noise is between the first threshold and a second threshold.

The method may comprise:
abstaining from encoding visible information in the coding block when the determined amount of noise is greater than or equal to the second threshold.

Determining an amount of noise in the video frame may comprise:
determining motion vectors by comparing pixels of the video frame with pixels of a previous video frame;
identifying a portion of the video frame corresponding to a moving object based on the determined motion vectors;
determining an amount of noise in the video frame excluding the identified portion.

The method may comprise:
adjusting a number of coding blocks in the video frame based on the determined amount of noise; and
encoding visible light communication information in the coding blocks.

The method may comprise:
processing the video frame to reduce the amount of noise in the video frame.

Processing the video frame to reduce the determined amount of noise may comprise filtering the video frame in time or in space.

According to a second aspect disclosed herein, there is provided an apparatus for encoding visible light communication information, the apparatus comprising a processing unit configured to:
determine an amount of noise in a video frame;
adjust a size of a coding block in the video frame based on the determined amount of noise; and
encode visible light communication information in the coding block

According to a third aspect disclosed herein, there is provided a computer program for an apparatus, comprising software code portions for performing the above methods.

### Brief Description of the Drawings

To assist understanding of the present disclosure and to show how embodiments may be put into effect, reference is made by way of example to the accompanying drawings in which:
Figure 1 shows schematically an example of an apparatus according to an embodiment disclosed herein;
Figures 2 and 3 show schematically an example of a video frame according to an embodiment disclosed herein;
Figures 4a, 4b and 4c show schematically examples of a coding area of a video frame according to an embodiment disclosed herein; and
Figures 5 and 6 shows schematically examples of a flow diagram of a method according to an embodiment disclosed herein.

### Detailed Description

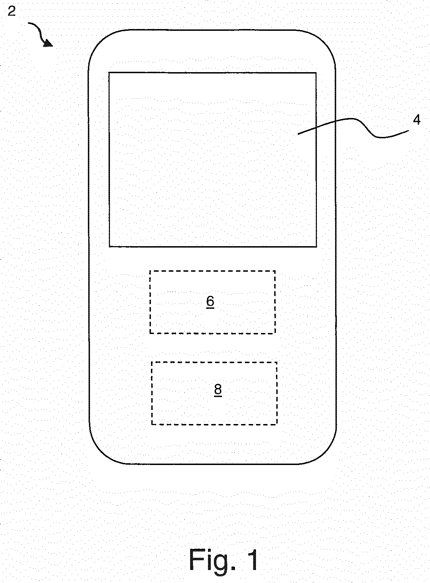

Figure 1 shows schematically an example of an apparatus 2 according to an embodiment. The apparatus 2 may be a mobile phone (e.g. a smart phone), a laptop computer, a tablet computer, a desktop computer, a television set, a projector, a smart watch, a display panel or wall such as for so-called signage, etc.

The apparatus 2 comprises a screen 4. The screen 4 may be a liquid crystal display, an (inorganic or organic) light emitting diode display, a plasma display, a projector screen, etc.

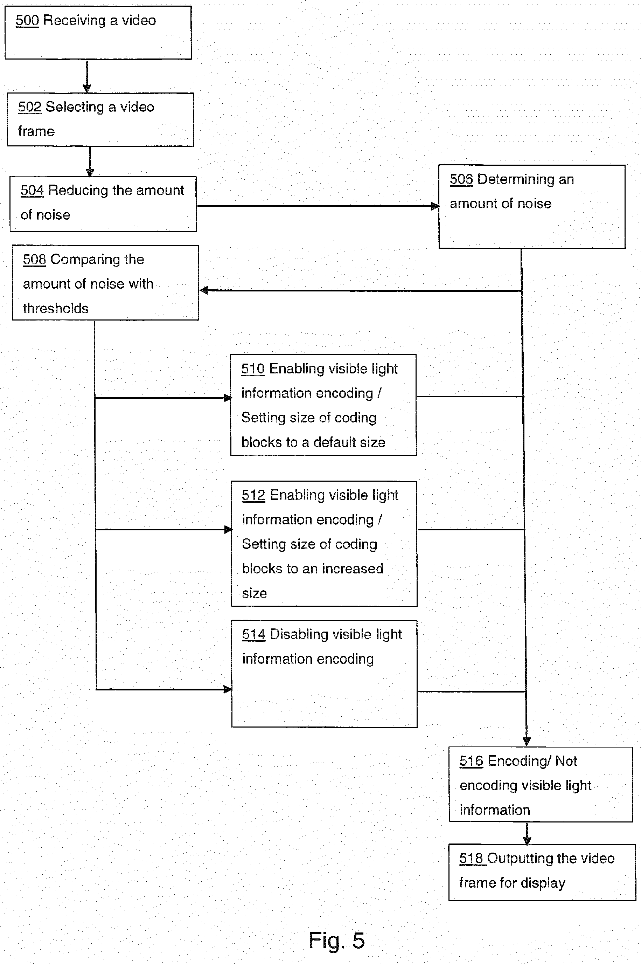

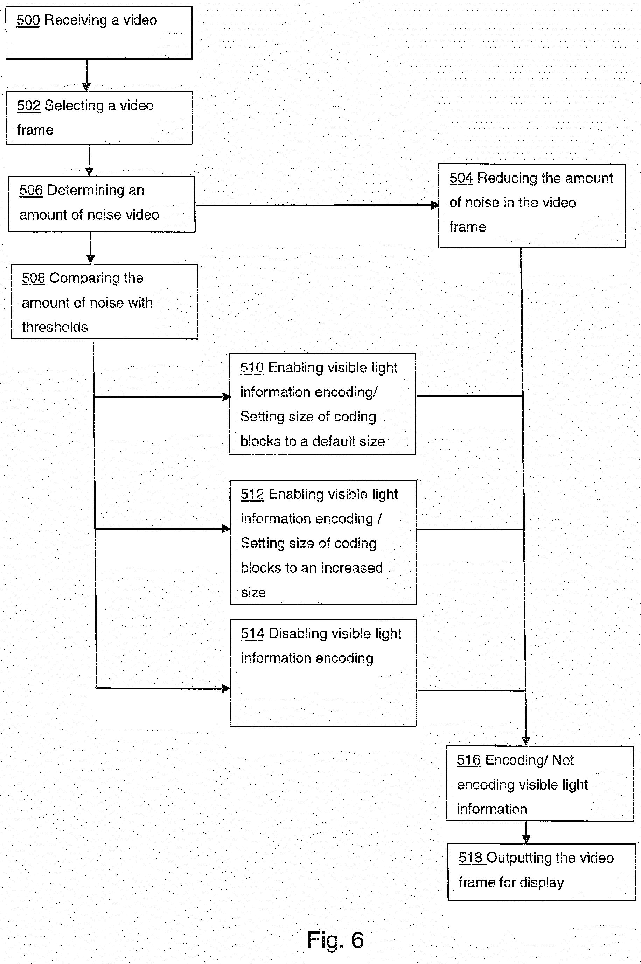

The apparatus 2 comprises a memory unit 6 and a processor unit 8. The memory unit 6 stores video frames to be displayed on the screen 4. The memory unit 6 also stores instructions which when executed by the processing unit 8 allows the processing unit 8 to perform the method of Figure 5 or the method of Figure 6 (discussed in further detail below).

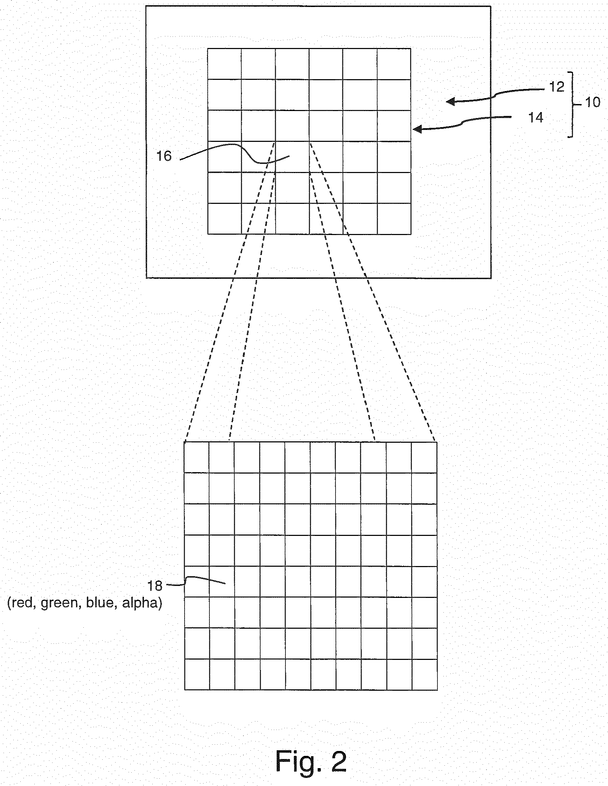

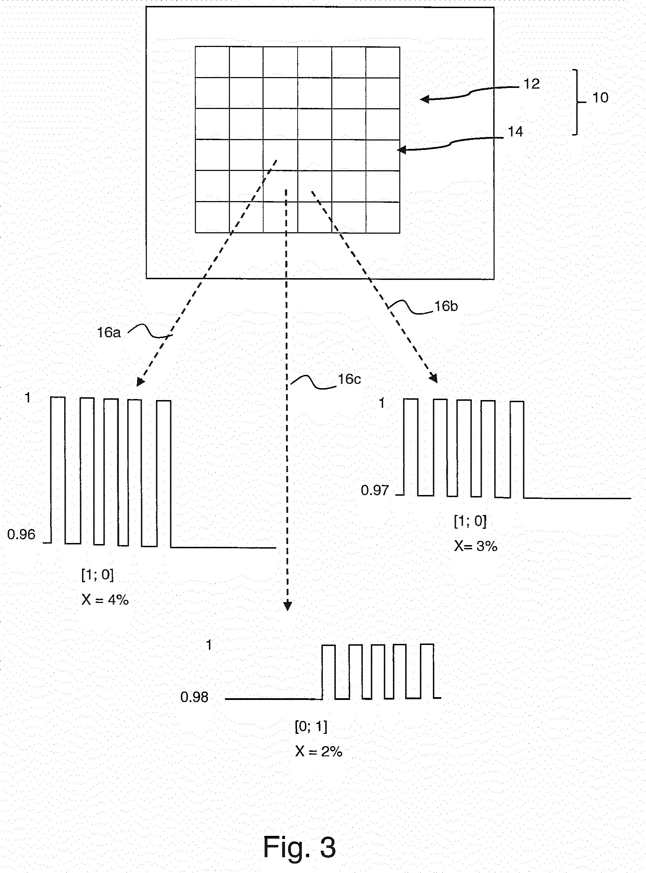

Figure 2 and Figure 3 show schematically a video frame 10 with encoded visible light information displayed on the screen 4. The video frame 10 comprises a non-coding area 12 and a coding area 14. The coding area 14 comprises a plurality of coding blocks 16 to encode respective visible light communication information. The size and number of coding blocks 16 in the coding area 14 is adjustable.

Each coding block 16 comprises a plurality of pixels 18. Each pixel 18 comprises a red channel, a blue channel, a green channel and optionally an alpha channel. As a result, each pixel 18 is characterized by a plurality of properties such as a luminance and a colour hue.

The luminance of a pixel 18 is indirectly defined by the red channel, the green channel and the blue channel.

The colour hue of a pixel 18 is indirectly defined by the red channel, the green channel and the blue channel.

Visible light communication information may be encoded in a coding block 16 by modulating the value of a property of each pixel 18 of the coding block 16 in consecutive video frames. The modulation is typically a modulation in amplitude, in frequency or in phase based on the visible light communication information to be encoded.

In the following, a modulation in amplitude is discussed in reference to Figure 3.

When the visible light communication information comprises a logical '0', the value of the property of each pixel 18 of the coding block 16 is set to 100-X% of an original value of the property in consecutive video frames 10. The original value of the property is the value of the property defined by the red channel, the green channel, and the blue channel of the pixel 18 in the stored video frame 10 (as opposed to the displayed video frame). X is a number representing an amplitude shift of the modulation.

When the visible light communication information comprises a logical '1', the value of the property of each pixel 18 of the coding block 16 is alternatively set to 100% or 100-X% of the original value of the property in consecutive video frames 10.

For example, visible light information [1;0] is to be encoded by a coding block 16a. First, the value of the luminance of each pixel 18 of the coding block 16a is set to 96% of the original value in consecutive video frames. Then, the value of the luminance of each pixel 18 of the coding block 16a is alternatively set to 100% or 96% of the original value in subsequent consecutive video frames 10.

Visible light information [1;0] is to be encoded by a coding block 16b. First, the value of the luminance of each pixel 18 of the coding block 16b is set to 97% of the original value in consecutive video frames. Then, the value of the luminance of each pixel 18 of the coding block 16b is alternatively set to 100% or 97% of the original value in subsequent consecutive video frames 10.

Visible light information [0; 1] is to be encoded by a coding block 16c. First, the value of the luminance of each pixel 18 of the coding block 16c is set to 98% of the original value in consecutive video frames. Then, the value of the luminance of each pixel 18 of the coding block 16c is alternatively set to 100% or 98% of the original value in subsequent consecutive video frames.

As can be seen, the coding blocks 16a, 16b and 16c are spatially adjacent and are allocated different amplitude shifts (4% for the coding block 16a, 3% for the coding block 16b and 2% for the coding block 16c). In this way, both the flickering effect and the bit error rate may be reduced.

It will be understood that although in the above example the value of the luminance has been modulated to encode visible light information, the value of the colour hue could alternatively or additionally have been modulated.

The number and size of coding blocks 16 in the coding area 14 can be adjusted based on the amount of noise in the video frame 10.

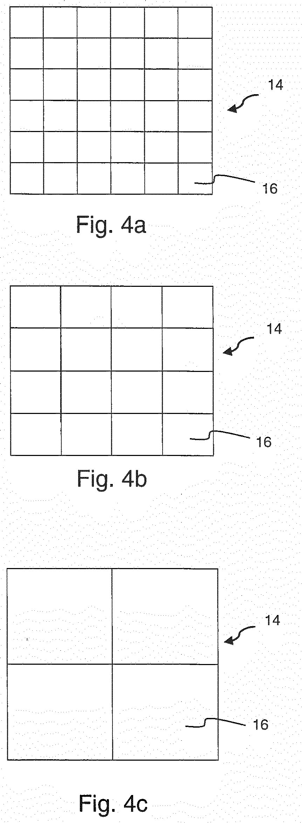

Figure 4a shows the coding area 14 when the size of coding blocks 16 is set to a default size and the number of coding blocks 16 is set to a default number.

Figure 4b shows the coding area 14 when the size of coding blocks 16 is set to an increased size and the number of coding blocks 16 is set to a reduced number.

Figure 4c shows the coding area 14 when the size of coding blocks is set to a further increased size and the number of coding blocks is set to a further reduced number.

Figure 5 shows schematically an example of a flow diagram of a method performed by the apparatus 2.

In step 500, the processing unit 8 receives a video comprising a plurality of video frames from the memory unit 6.

In step 502, the processing unit 8 selects a video frame.

In step 504, the processing unit 8 processes the selected video frame 10 to reduce the amount of noise. For example, the processing unit 8 filters the selected video frame in time (e.g. averaging the red channel, the green channel and the blue channel of a pixel 18 in the selected video frame 10 respectively with the red channel, the green channel and the blue channel of the same pixel 18 in a previous video frame 10). Alternatively, the processing unit 8 filters the selected video frame 10 in space (e.g. averaging the red channel, the green channel and the blue channel of a pixel 18 in the selected video frame 10 respectively with the red channel, the green channel and the blue channel of one or more adjacent pixel 18 in the same selected video frame 10).

In step 506, the processing unit 8 determines an amount of noise in the selected video frame. In a possible implementation, the processing unit 8 determines motion vectors by comparing pixels 18 of the selected video frame 10 with pixels 18 of a previous video frame 10. The processing unit 8 then identifies a portion of the video frame corresponding to a moving object based on the determined motion vectors (e.g. based on the directions and/or magnitudes of the motion vectors). The processing unit 8 finally quantifies the noise excluding (i.e. ignoring) the identified portion. The skilled person will understand that other implementations are possible.

In step 508, the processing unit 8 compares the determined amount of noise to thresholds T1 and T2. The thresholds T1 and T2 may be stored in the memory unit 6 in a look-up table.

If the determined amount of noise is lower than or equal to the threshold T1 the method goes to step 510. If the determined amount of noise is between the threshold T1 and a threshold T2 the method goes to step 512. If the determined amount of noise is greater than or equal to the threshold T2, the method goes to step 514.

In step 510 (i.e. the determined amount of noise is lower than or equal to the threshold T1), the processing unit 8 enables visible light information encoding. The processing unit 8 sets the size of coding blocks 16 in the coding area 14 of the selected video frame 10 to the default size and sets the number of coding blocks 16 in the coding area 14 of the selected video frame 10 to the default number (see Figure 4a). The processing unit 8 further sets the amplitude shift X to a default amplitude shift (e.g. 1%).

In step 512 (i.e. the determined amount of noise is between the threshold T1 and the threshold T2), the processing unit 8 enables visible light information encoding. The processing unit 8 sets the size of the coding blocks 16 in the coding area 14 of the selected video frame 14 to an increased size and sets the number of coding blocks 16 in the coding area 14 of the selected video frame 14 to a reduced number (see Figure 4b and Figure 4c). The processing unit further sets the amplitude shift X to an increased amplitude shift (e.g. 2% to 8%).

It will be understood that the size of the coding blocks 16, the number of the coding blocks 16 and the value of the amplitude shift X may vary monotonically with the determined amount of noise. The greater the determined amount of noise, the greater the size of the coding blocks 16, the smaller the number of coding blocks 16 and the greater the amplitude shift X.

In step 514 (i.e. the determined amount of noise is greater than or equal to the threshold T2), the processing unit 8 disables visible light information encoding.

In step 516, the processing unit 8 determines whether visible light information encoding is enabled. If visible light information encoding is enabled the processing unit 8 encodes visible light information in the coding blocks 16 by modulating a property of the pixels 18 of the coding blocks 16 as discussed in reference to Figures 2 and 3. If visible light information encoding is disabled the processing unit 8 does not encode any visible light information in any coding block 16

In step 518, the processing unit 8 outputs the selected video frame 10 with visible light information encoded in the coding blocks 16 for display on the screen 4.

Figure 6 shows schematically another example of a flow diagram of a method according to an embodiment disclosed herein. The method of Figure 6 is identical to the method of Figure 5 except that the steps 506 and 508 are inverted. In other words, the amount of noise in the selected video frame 10 is determined before processing the selected video frame 10 to reduce the noise.

An advantage of the above embodiments is that by adjusting the size and number of coding blocks in the coding area of a video frame based the determined amount of noise, the amount of visible light communication information encoded in a video frame can be maximized whilst reducing a bit error rate.

It will be understood that the processing unit referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to a memory unit for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

**1.** A method for encoding visible light communication information, the method comprising:
determining an amount of noise in a video frame;
adjusting a size of a coding block of the video frame based on the determined amount of noise; and
encoding visible light communication information in the coding block of the video frame.

**2.** A method according to claim 1, wherein encoding visible light communication information in the coding block of the video frame comprises modulating a property of at least one pixel of the coding block based on the visible light communication information.

**3.** A method according to claim 2, wherein modulating a property of at least one pixel of the coding block comprises:
modulating a property of at least one pixel of the coding block in amplitude based on the visible light communication information.

**4.** A method according to claim 3, wherein modulating a property of at least one pixel of the coding block in amplitude based on the visible light communication information comprises:
setting a value of the property of the at least one pixel to 100-X% of an original value of the property when the visible light communication information to be encoded in the coding block comprises a first logical value, where X is an amplitude shift for the coding block; and
setting the value of the property of the at least one pixel alternatively to 100% or 100-X% of the original value of the property when the visible light communication information to be encoded in the coding block comprises a second logical value.

**5.** A method according to claim 3 or claim 4, wherein the amplitude shift X for the coding block is determined based on the determined amount of noise.

**6.** A method according to claim 3 to 5, wherein the amplitude shift X for the coding block is different from an amplitude shift X for a spatially adjacent coding block in the video frame.

**7.** A method according to claims 3 to 6, wherein the property of the at least one pixel comprises at least one of a luminance and a colour hue.

**8.** A method according to any of claims 1 to 7, comprising:
comparing the determined amount of noise to at least one threshold; and
adjusting the size of the coding block in the video frame based on the comparing.

**9.** A method according to claim 8, comprising:
setting the size of the coding block in the video frame to a default size when the determined amount of noise is below a first threshold;
setting the size of coding blocks in the video frame to an increased size when the determined amount of noise is between the first threshold and a second threshold.

**10.** A method according to claim 9, comprising:
abstaining from encoding visible information in the coding block when the determined amount of noise is greater than or equal to the second threshold.

**11.** A method according to any of claims 1 to 10, wherein determining an amount of noise in the video frame comprises:
determining motion vectors by comparing pixels of the video frame with pixels of a previous video frame;
identifying a portion of the video frame corresponding to a moving object based on the determined motion vectors;
determining an amount of noise in the video frame excluding the identified portion.

**11.** A method according to any of claims 1 to 10, comprising:
adjusting a number of coding blocks in the video frame based on the determined amount of noise; and
encoding visible light communication information in the coding blocks.

**12.** A method according to any of claims 1 to 11, comprising:
processing the video frame to reduce the amount of noise in the video frame.

**13.** A method according to claim 12, wherein processing the video frame to reduce the determined amount of noise comprises filtering the video frame in time or in space.

**14.** An apparatus for encoding visible light communication information, the apparatus comprising a processing unit configured to:
determine an amount of noise in a video frame;
adjust a size of a coding block in the video frame based on the determined amount of noise; and
encode visible light communication information in the coding block

**15.** A computer program for an apparatus, comprising software code portions for performing the method of any of claims 1 to 13 when said computer program is run on the apparatus.
